# EUROPEAN PATENT SPECIFICATION

(11) **EP 3 715 900 B1**
(45) Date of publication and mention of the grant of the patent: **18.11.2026**
(21) Application number: 20163992.9
(22) Date of filing: 18.03.2020
(51) Int. Cl.: G01S 7/40, G01S 13/08, G01S 13/42

(54) **METHOD OF DETECTING A TARGET WITH ENVIRONMENT-ADAPTIVE CALIBRATION**
VERFAHREN ZUM ERKENNEN EINES TARGETS MIT UMGEBUNGSADAPTIVER KALIBRIERUNG
PROCÉDÉ DE DÉTECTION D'UNE CIBLE AVEC ÉTALONNAGE ADAPTÉ À L'ENVIRONNEMENT

(30) Priority: 25.03.2019 IT 201900004243
(43) Date of publication of application: 30.09.2020
(73) Proprietor: Inxpect S.p.A., 25131 Brescia (BS) (IT)
(72) Inventor: Degani, Alessio, 25131 Brescia BS (IT); Garatti, Marco, 25131 Brescia BS (IT); Tartaro, Andrea, 25131 Brescia BS (IT)
(74) Representative: Perani & Partners S.p.A.

(56) References cited:
- WO-A1-2016/120051
- WO-A2-2018/005498
- US-A1- 2011 181 458

## Description

### Field of the invention

The present invention relates to the detection of objects in an environment to be monitored, e.g. using radar technologies. More in detail, the invention relates to a detection method that includes calibration steps for a detection device.

### Background art

Systems for detecting objects in an environment, such as radar systems, can transmit an electromagnetic signal into an environment to be monitored and receive a signal reflected from the objects to identify their position in the environment.

These systems can be used for safety, both in intrusion alarms and for personnel safety in factories in which moving too close to certain machinery having moving parts is dangerous. A critical requirement in these applications is the ability of the device to properly distinguish the different targets. In intrusion alarm systems used by private entities the device must distinguish the movements of humans from those of pets, birds or other animals, to avoid false alarms. In industrial applications the device should signal human movements to set machinery in safe mode when operators enter the protected area, i.e. the area near machinery having moving parts.

Target distinction is based on the Radar Cross Section (RCS).

RCS is a physical property of the target that varies according to the shape, material and the size of the target and is thus an object-specific property. RCS is indirectly obtained from the power received (backscattered) from the target toward the receiver. Nevertheless, the backscattered power depends on various factors including the amplitude of the electromagnetic signal, the distance of the target from the detection device and the mounting conditions of the device. Since RCS can be only indirectly estimated, as long as the distance from the receiver and the power of the target are known, power should be made independent of target position by calibration.

### Problem of the prior art

In certain prior art detection systems, the detection device is calibrated using installation curves of the radar that are standard and do not adapt to the environment and to mounting setup. Nevertheless, the applicant found that such calibration is inaccurate and causes a great number of false alarms.

Prior art document WO 2016120051 discloses a method of detecting the tilt in the vertical direction of a radar mounted to a vehicle. The method includes collecting amplitude data of a single target which is detected in different positions as the vehicle and/or the target move. Such amplitudes are plotted as a function of to the horizontal angle at which the radar sees the target. Furthermore, inherent amplitude variations caused by the varying distance of the target and by the antenna gain according to the horizontal angles are compensated for. The final form of the chart is used to detect tilts in the vertical direction. Therefore, WO 2016120051 suggests steps to compensate for the different amplitudes with which a target is detected in different positions, in a broader tilt detection method. Like in the above discussed prior art examples, this compensation is only carried out using preset curves (such as the monostatic radar equation) that do not account for the distortions caused by the use of a fixed environment.

WO 2018005498 discloses a mathematical method that is used in one example to estimate the RCS of a target by a radar. Two curves are created, one for a reference target ("calibrated curve 302") and one during a subsequent detection of another target ("model curve 300"). Both the curves are built starting from a collection of signal amplitude values for different positions of the target. Both the curves are then obtained by selecting a curve that fits the relative collection of points and that decades as the monostatic radar equation. An initial part of both curves is flat due to saturation of the radar. RCS is esteemed from the horizontal shift of the two curves. This is kind of comparison is based on position shift at fixed amplitudes.

### SUMMARY OF THE INVENTION

The appended claims define the scope of protection. The object of the present invention is to obviate the aforementioned prior art problems, and particularly to provide a detection method in which a detection device is calibrated to discriminate targets while accounting for the environment and the mounting setup.

This and other objects are fulfilled by a method of detecting objects in an environment as defined in any of the accompanying claims. In particular, the device performs its calibration by transmitting and receiving the electromagnetic signal of a calibration target that is being moved in the field of view. For calibration the reflected signals are combined to generate a combined profile. The combined profile, after optional filtering or further processing affecting only marginally its whole shape, is used as a correction curve, or calibration curve, to be applied to detections after calibration. Thus, the method allows the signal amplitude of targets to be calibrated while accounting for the environment and the mounting setup.

In the preferred embodiment, the reflected signals are not only combined but also filtered and compared with a reference signal amplitude function depending on the distance from the device and the mounting setup of the device. This comparison allows a correction factor to be calculated, which minimizes the error between the combination of the signals and the reference function. This reference function is multiplied by the correction factor and by a coefficient of less than 1 to generate a curve for eliminating minimum values. The calibration curve is obtained from this curve, by eliminating the minimum values from the combined profile.

### BRIEF DESCRIPTION OF THE DRAWINGS

The present invention will be described with the help of the attached figures, representing steps that are taken according to a preferred embodiment of the invention, wherein:
- figure 1 schematically shows a temporal succession of detection profiles corresponding to a succession of signals reflected by a calibration target,
- figure 2 shows a combined profile obtained by combining amplitudes and positions derived from the succession of reflected signals,
- figure 3 shows the filtering of the combined profile to obtain a filtered profile,
- figure 4 shows the identification, among a family of reference functions, of the one best fitting the filtered profile,
- figure 5 shows rescaling of the selected reference function for obtaining a curve for eliminating the minimum values, and
- figure 6 shows obtaining the final calibration curve, as a maximum of the filtered profile and the curve for eliminating the minimum values.

### DETAILED DESCRIPTION

The present invention discloses a detection method that includes calibration steps for a target detection device in an environment to be monitored. The detection system is preferably a radar system.

Both during calibration, as described below, and later during normal operation of the device, the detection device transmits electromagnetic signals via an antenna. Later, the signals reflected from the environment and received by the device are mixed with the signals that have been transmitted and processed to obtain a baseband signal. The baseband signal has a frequency that is equal to the difference between the frequencies of the transmitted signals and the received signals.

After each transmission cycle, the baseband signal is processed to generate a detection profile with well-known methods, e.g. comprising a Fourier transform. The detection profile is analyzed to check whether the target to be identified is in the environment or not. Such check is made by identifying amplitude peaks above a distinctive threshold. A target signal amplitude and a target position are determined for each target, in a well-known manner.

Once the device has been installed in the desired environment, the device must be calibrated for the target to be able to be distinguished irrespective of the distance of the target in the environment from the device. The initial calibration particularly provides a calibration curve that will be later used to estimate the Radar Cross Section of the target. This is because, as discussed above, the same target may originate reflected signals of different amplitudes depending on its position in the environment, while still having the same RCS.

In one aspect of the invention, calibration requires a calibration target to be moved in the field of view of the detection device and a succession of signals reflected from the moving target to be acquired. The target must move along the field of view of the device from a location selected as the origin in the environment. The target moves along a predetermined path, e.g. along the normal to the device.

The calibration target may be a man, a machine or any target to be discriminated. For example, depending of the installation environment, discrimination may be desired between a human target and an animal target for safety of an environment, or between a human and a machine in industrial applications and so on. In the preferred embodiment, the target moves by walking.

The device is capable of measuring the distance of the target from the device using known techniques and may be optionally capable of measure the angle within the field of view of the target, known as azimuth angle. In this case, calibration may be carried out while also accounting for the angle with the normal for each distance from the receiver. Therefore, calibration results in the generation of a calibration curve with value that generally differ according to the position of the target, in terms of both distance and azimuth angle. The calibration will be initially described with reference to distance correction only, and more in detail below with corrections that also contemplate the azimuthal angle.

Once the reflected signals have been acquired, the signals that represent the calibration target movements are processed and combined with one another to generate a combined profile. Generating the combined profile comprises obtaining, for each distance of the predetermined path, an amplitude value derived from a corresponding reception signal of the succession, for which the target is detected to be at said distance.

In one embodiment, the calibration curve is equal to the combined profile. Nevertheless, as more clearly explained below, the construction of the calibration curve may comprise additional successive substeps, whereby the calibration curve remains equal to the combined profile only for a few sets of positions, or the calibration curve is equal to values that are modified from those of the combined profile.

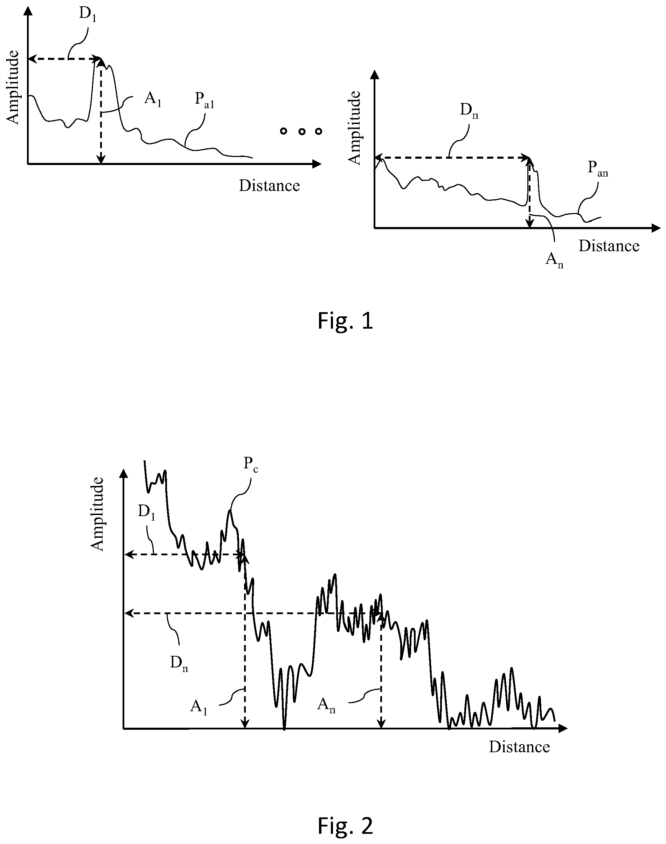

More in detail, the construction of the combined profile, with reference to figure 1, involves the generation of a sequence of amplitude profiles dependent on the position Pₐ₁, ..., Pₐₙ, which sequence corresponds to the sequence of reflected signals of the sequence. The amplitude values of the combined profile are each extracted from a corresponding amplitude profile of the sequence, while keeping their relation with the position (for example the amplitude values A₁, ..., Aₙ correlated to the distances D₁, ..., Dₙ). The derived combined profile P_{c} is shown in figure 2.

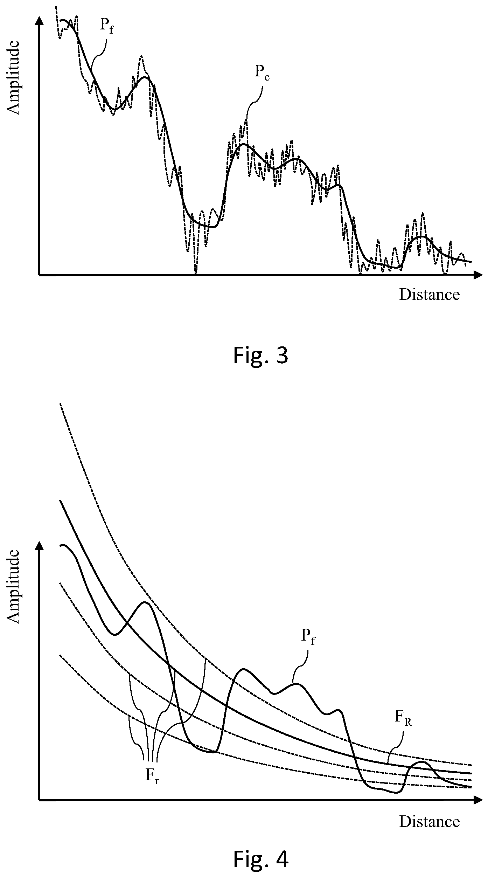

Preferably, in order to generate the calibration curve, the amplitude values of the combined profile are filtered, to thereby obtain a filtered profile P_{f}, which is visible in figure 3 together with the superimposed dashed combined profile P_{c} (high-frequency components of the combined profile have been exaggerated to better highlight filtering in the figures). In one embodiment, the calibration curve is equal to the filtered profile, and not to the combined profile. In general, in the preferred embodiments the calibration curve is equal to a chosen profile, that is selected between the combined profile and the filtered profile, for all the positions in the environment, or at least for a subset of first positions thereof, as discussed below.

In more detail about the filtering, the filter applied to the combined profile is a digital low-pass filter. The filter operates on distributions of values, namely signal amplitudes, as a function of positions in the field of view. For example, the filter may output, for each position, an average of the values of the input profile given for that position and for a set of positions surrounding it. This example of moving average, which is applied according to the position and not according to a time sequence, will allow to the skilled person to also implement other equivalent digital filters (such as FIR and IIR) in obvious ways.

The aforementioned low-pass filter is thus configured to damp the position-dependent variations of the values of the combined profile, while preserving the general pattern of the combined profile. In other words, the filter damps the high-frequency components of the combined profile, i.e. the noise of the combined profile, without damping its low-frequency components. Such components and their frequencies are to be understood in terms of distribution of values as a function of the position. The filter has its own cutoff frequency between the frequencies of the low-frequency components, which are not significantly damped, and the frequencies of the high-frequency components.

In certain embodiments, generating the calibration curve comprises increasing at least some of the amplitude values of the chosen profile. In detail, it shall be noted that the chosen profile has values ranging from a minimum value to a maximum value. The amplitude values that are increased are generally amplitude values proximate to the minimum value.

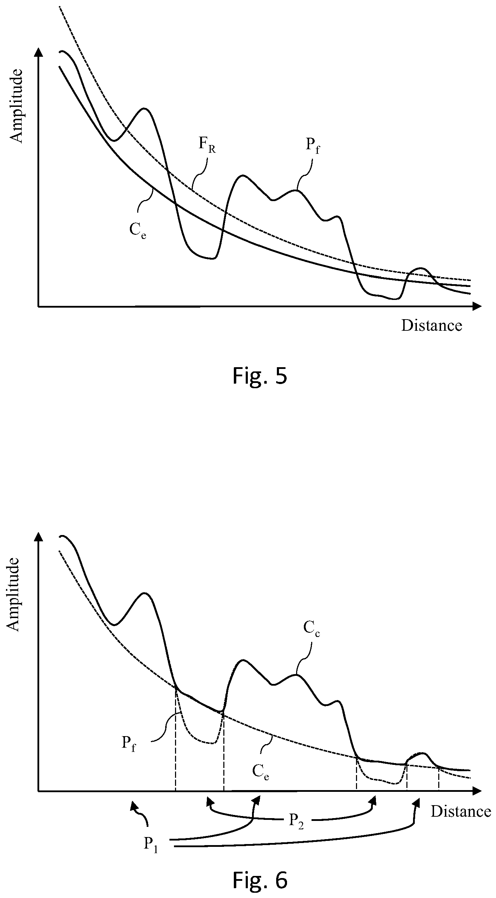

The preferred increasing method is based on a curve for eliminating the minimum values Cₑ as a function of distance, or position. Thus, the chosen profile is compared with the minimum value eliminating curve. Hence, the set of positions in the environment is divided into first positions P₁ (figure 6), where the chosen profile is greater than the minimum value eliminating curve, and second positions P₂ where the chosen profile is smaller than the minimum value eliminating curve. The (generally rare) positions in which the chosen profile is exactly equal to the minimum value eliminating curve may be indifferently regarded as first or second positions.

Therefore, the minimum value eliminating curve provides a rule to determine the positions in which the chosen profile must be increased, i.e. the second positions, where the calibration curve will be greater than the chosen profile, and the positions in which the calibration curve will remain equal to the chosen profile, i.e. the first positions. **In** the preferred embodiment, the values of the calibration curve are calculated for each position as a maximum of the chosen profile and the minimum value eliminating curve.

Since these profiles and curves have a minor variability between adjacent positions in real environments, the sets of the first positions and of the second positions will not easily contain individual isolated positions, or in any case such positions will be in a small number. Conversely, one or more first pluralities of positions will be found in the first positions, and one or more second pluralities of positions will be found in the second positions, each of such pluralities being composed of adjacent positions.

More in detail, at least one first plurality of positions completely covers at least a continuous length of said predetermined path, for example a range of distances. Preferably, the first positions cover at least 50% of the positions of the field of view. On the other hand, the second positions will include those in which the calibration target has not been carried, or anyway in which it has not been detected, in addition to positions in which for some reason it is detected with a very low intensity, not justified for example by the distance.

In the preferred embodiment, in order to generate the minimum value eliminating curve, a reference function, or a family of reference functions, may be first provided giving signal amplitude as a function of the distance and optionally of the azimuthal angle of the target relative to the detection device.

The eliminating curve will be obtained using the reference function and a correction factor. In the preferred embodiment, the reference function is multiplied by the correction factor. As the correction factor varies, a family of reference functions Fᵣ is then obtained in each case (as shown in figure 4 with different functions for different correction factors).

In particular, the reference function for signal amplitude is represented by an ideal signal attenuation varying as a function of the distance of the target from the device. This attenuation is calculated using the monostatic radar equation, which establishes that the power of the received signal is proportional to the RCS of the target and is inversely proportional to the distance of the target from the device to the fourth power.

In addition, the reference function also accounts for the information about the positioning setup of the detection device, relating to the way the device is installed in the environment in which it is placed. Preferably, the setup information relates to the height and tilt of the device relative to the floor of the environment.

In order to obtain an eliminating curve that is as close as possible to the chosen profile, the chosen profile is compared with the reference function to generate the correction factor. In particular, the comparison includes minimizing the mean-square error (least square) between the chosen profile and the product of the reference function and the correction factor. Once the mean-square error has been minimized, the correction factor can be multiplied by a coefficient of less than one. In the preferred embodiment, the coefficient ranges from 0.5 to 0.9, and is more preferably about 0.8.

This corresponds to selecting the curve that best fits the chosen profile from the family of reference functions Fᵣ (the selected curve being indicated as F_{R} and represented with a continuous line in figure 4), and preferably multiplying it by the coefficient of less than one, to thereby obtain the eliminating curve Cₑ, shown in figure 5 (where, instead, the function selected previously based on the least square method is dashed).

In a simplified embodiment, the eliminating curve is instead obtained irrespective of any comparison with the chosen profile, e.g. By selecting a monostatic radar equation with an arbitrary amplitude and avoiding any fitting.

Finally, as mentioned above, the calibration curve C_{c} may be calculated as the maximum of the extracted amplitude values, optionally filtered (i.e. the chosen profile), and the eliminating curve, as shown in figure 6.

In short, in the preferred embodiment, the low values of the chosen profile are eliminated, or increased, because the calibration curve can never be smaller than the minimum eliminating curve. The minimum elimination curve is calculated by multiplying the reference function by the correction factor obtained by minimizing the error and optionally by multiplying it by the coefficient of less than one.

The elimination of minimum values is implemented because errors during acquisition of the sequence of reflected signals might cause the chosen profile to assume substantially zero values as the target was not detected.

On the other hand, if the minimum values were eliminated without applying the coefficient of less than one, the form of the chosen profile would be significantly altered, as it would lose relatively low values that are still correctly representative of signal attenuation. Therefore, the coefficient of less than one allows the calibration curve to remain as a whole more similar to the chosen profile.

In one aspect of the method of detecting a target in the environment, each detection after calibration includes estimating the radar cross section of each detected target by comparing the target signal amplitude with a signal amplitude base value, provided by the calibration curve at the target position. This may be accomplished, for example, by calculating at least one comparison value selected from a difference value, obtained by subtracting the base value from the target signal amplitude, and a ratio value, obtained by dividing the target signal amplitude by the base value.

Preferably, the entire calibration curve is applied to the current detection profile to generate an output profile which includes the comparison value. For example, the detection profile is divided by the calibration curve.

**In** both cases, a target category may be associated with the comparison value, based on a predetermined correspondence. For example, if the calibration target was a human target and another human target of similar size is later detected (in a position of the first plurality of positions), the comparison value given by the ratio value is close to 1. For comparison values, for example, of less than 0.6 the target may be deemed to be not human, and possibly an animal target.

Advantageously, the calculation described for the calibration curve accounts for the amount of attenuation of the reflected signal at each distance, as measured for the specific environment in which the device is installed. As a result of the comparison between the current detection profile and the calibration curve, a single target in the output profile generates amplitude peaks that are substantially independent of the distance.

If a calibration curve is desired that also accounts for the azimuthal angle, one of the following exemplary procedures may be followed. In one example, the target moves along a non-straight path in the field of view of the device, preferably such that for each azimuthal angle of a plurality of azimuthal angles in the field of view the target is moved to a plurality of distances. This will provide a combined profile for each azimuthal angle.

Depending on the selected embodiment, this combined profile may be directly used as a calibration curve, or filtering may be provided, as described above, or the values close to the minimum may be increased. In the latter case, the method comprises, at each angle, comparing the chosen profile for that angle with the reference function to generate a correction factor for each angle. Optionally a multiplication by the coefficient of less than one is provided. Also, the steps are provided of generating an eliminating curve for each angle, and calculating it using each time the correction factor of that angle and the reference function, and comparing, for each angle, the combined or filtered profile with the eliminating curve for that angle.

According to another example, the angular correction may be calculated using the radiation pattern of the antenna. Here, the target can only move along the normal of the device. For each distance along the normal, the measured signal will be weighed according to the radiation pattern of the antenna. In other words, the calibration curve, external to the normal, is calculated, for each distance, by multiplying the value, taken by the calibration curve along the normal for that distance, by an attenuation value provided by the antenna pattern.

A skilled person may obviously envisage a number of equivalent changes to the above discussed variants, as long as they fall within the scope as defined by the appended claims.

## Claims

1. A method of estimating a radar cross section of a target in an environment using a detection device, the detection device being configured to transmit transmission signals into a field view and receive reception signals, the method comprising:
- calibrating the detection device to generate a calibration curve (C_{c}) that provides signal amplitude values as a function of positions of the target in the field of view,
- detecting a reception signal, obtaining a corresponding detection profile, and analyzing the detection profile to identify a target, having a target signal amplitude and a target position corresponding thereto,
- estimating the radar cross section of the target by comparing the target signal amplitude with a signal amplitude base value, provided by the calibration curve at the target position, wherein calibrating the detection device comprises:
- positioning and moving a calibration target from a point of origin along a predetermined path in said environment toward or away from the detection device,
- acquiring a succession of reception signals during said step of moving the calibration target,
- generating a sequence of amplitude profiles dependent on the position (Pₐ₁, ..., Pₐₙ), corresponding to the succession of reflected signals,
- processing and combining together the reception signals of the succession to generate a combined profile (P_{c}) as a function of the position, by obtaining, as amplitude values of the combined profile (P_{c}), for each position of the predetermined path (D₁, Dₙ), an amplitude value (A₁, Aₙ) extracted from a corresponding amplitude profile of the sequence, for which the target is detected to be at said position (D₁, Dₙ),
wherein the calibration curve is equal to a chosen profile that is the combined profile (P_{c}).

2. A method of estimating a radar cross section of a target in an environment using a detection device, the detection device being configured to transmit transmission signals into a field view and receive reception signals, the method comprising:
- calibrating the detection device to generate a calibration curve (C_{c}) that provides signal amplitude values as a function of positions of the target in the field of view,
- detecting a reception signal, obtaining a corresponding detection profile, and analyzing the detection profile to identify a target, having a target signal amplitude and a target position corresponding thereto,
- estimating the radar cross section of the target by comparing the target signal amplitude with a signal amplitude base value, provided by the calibration curve at the target position, wherein calibrating the detection device comprises:
- positioning and moving a calibration target from a point of origin along a predetermined path in said environment toward or away from the detection device,
- acquiring a succession of reception signals during said step of moving the calibration target,
- generating a sequence of amplitude profiles dependent on the position (Pₐ₁, ..., Pₐₙ), corresponding to the succession of reflected signals,
- processing and combining together the reception signals of the succession to generate a combined profile (P_{c}) as a function of the position, by obtaining, as amplitude values of the combined profile (P_{c}), for each position of the predetermined path (D₁, Dₙ), an amplitude value (A₁, Aₙ) extracted from a corresponding amplitude profile of the sequence, for which the target is detected to be at said position (D₁, Dₙ),
- generating a filtered profile (P_{f}) by applying a filter to the combined profile (P_{c}), the filter being a low-pass filter that operates on distributions of values as a function of positions in the field of view,
wherein the calibration curve is equal to a chosen profile that is the filtered profile (P_{f}).

3. A method of estimating a radar cross section of a target in an environment using a detection device, the detection device being configured to transmit transmission signals into a field view and receive reception signals, the method comprising:
- calibrating the detection device to generate a calibration curve (C_{c}) that provides signal amplitude values as a function of positions of the target in the field of view,
- detecting a reception signal, obtaining a corresponding detection profile, and analyzing the detection profile to identify a target, having a target signal amplitude and a target position corresponding thereto,
- estimating the radar cross section of the target by comparing the target signal amplitude with a signal amplitude base value, provided by the calibration curve at the target position, wherein calibrating the detection device comprises:
- positioning and moving a calibration target from a point of origin along a predetermined path in said environment toward or away from the detection device,
- acquiring a succession of reception signals during said step of moving the calibration target,
- generating a sequence of amplitude profiles dependent on the position (Pₐ₁, ..., Pₐₙ), corresponding to the succession of reflected signals,
- processing and combining together the reception signals of the succession to generate a combined profile (P_{c}) as a function of the position, by obtaining, as amplitude values of the combined profile (P_{c}), for each position of the predetermined path (D₁, Dₙ), an amplitude value (A₁, Aₙ) extracted from a corresponding amplitude profile of the sequence, for which the target is detected to be at said position (D₁, Dₙ),
- providing a minimum value eliminating curve (Cₑ), wherein the set of positions in the environment is divided into first positions (P1), where the combined profile (P_{c}) is greater than the minimum value eliminating curve (Cₑ), and second positions (P2) where the combined profile (P_{c}) is smaller than the minimum value eliminating curve (Cₑ),
wherein the values of the calibration curve (C_{c}) are calculated for each position as a maximum of a chosen profile, that is the combined profile (P_{c}), and the minimum value eliminating curve (Cₑ).

4. A method of estimating a radar cross section of a target in an environment using a detection device, the detection device being configured to transmit transmission signals into a field view and receive reception signals, the method comprising:
- calibrating the detection device to generate a calibration curve (C_{c}) that provides signal amplitude values as a function of positions of the target in the field of view,
- detecting a reception signal, obtaining a corresponding detection profile, and analyzing the detection profile to identify a target, having a target signal amplitude and a target position corresponding thereto,
- estimating the radar cross section of the target by comparing the target signal amplitude with a signal amplitude base value, provided by the calibration curve at the target position, wherein calibrating the detection device comprises:
- positioning and moving a calibration target from a point of origin along a predetermined path in said environment toward or away from the detection device,
- acquiring a succession of reception signals during said step of moving the calibration target,
- generating a sequence of amplitude profiles dependent on the position (Pₐ₁, ..., Pₐₙ), corresponding to the succession of reflected signals,
- processing and combining together the reception signals of the succession to generate a combined profile (P_{c}) as a function of the position, by obtaining, as amplitude values of the combined profile (P_{c}), for each position of the predetermined path (D₁, Dₙ), an amplitude value (A₁, Aₙ) extracted from a corresponding amplitude profile of the sequence, for which the target is detected to be at said position (D₁, Dₙ),
- generating a filtered profile (P_{f}) by applying a filter to the combined profile (P_{c}), the filter being a low-pass filter that operates on distributions of values as a function of positions in the field of view,
- providing a minimum value eliminating curve (Cₑ), wherein the set of positions in the environment is divided into first positions (P1), where the filtered profile (P_{f}) is greater than the minimum value eliminating curve (Cₑ), and second positions (P2) where the filtered profile (P_{f}) is smaller than the minimum value eliminating curve (Cₑ),
wherein the values of the calibration curve (C_{c}) are calculated for each position as a maximum of a chosen profile, that is the filtered profile (P_{f}), and the minimum value eliminating curve (Cₑ).

5. A method as claimed in claim 3 or 4, wherein providing the minimum value eliminating curve (Cₑ) comprises:
- providing a reference function (F_{R}) of the signal amplitude versus the position from the detection device,
- comparing the chosen profile with the reference function (F_{R}) to generate a correction factor,
- calculating the minimum value eliminating curve (Cₑ) by using the correction factor and the reference function (F_{R}).

6. A method as claimed in claim 5, wherein comparing the chosen profile with the reference function (F_{R}) to generate a correction factor comprises:
- obtaining a family of reference functions (Fᵣ) by multiplying said reference function (Fᵣ) with a varying correction factor,
- selecting from the family of reference functions (Fᵣ) the curve that best fits the chosen profile.

7. A method as claimed in claim 6, comprising obtaining the minimum value eliminating curve (Cₑ) by multiplying said curve that best fits by a coefficient of less than 1.

8. A method as claimed in claim 7, wherein said coefficient is within a range from 0.5 to 0.9.

9. A method as claimed in any of claims 5 to 8, wherein the minimum value eliminating curve (Cₑ) and/or the reference function (Fᵣ) is given by the monostatic radar equation.

10. A method as claimed in any of claims 1 to 9, wherein the step of comparing the target signal amplitude with said signal amplitude base value comprises calculating at least one comparison value selected from a difference value, obtained by subtracting the base value from the target signal amplitude, and a ratio value, obtained by dividing the target signal amplitude by the base value.

11. A method as claimed in claim 10, comprising associating a target category with said comparison value according to a predetermined correspondence.

## Patentansprüche

1. Verfahren zum Schätzen eines Radarquerschnitts eines Ziels in einer Umgebung unter Verwendung einer Erfassungsvorrichtung, wobei die Erfassungsvorrichtung dazu eingerichtet ist, Sendesignale in ein Sichtfeld zu senden und Empfangssignale zu empfangen, wobei das Verfahren umfasst:
- Kalibrieren der Erfassungsvorrichtung, um eine Kalibrierkurve (Cc) zu erzeugen, die Signalamplitudenwerte als Funktion von Positionen des Ziels in dem Sichtfeld bereitstellt,
- Erfassen eines Empfangssignals, Erhalten eines entsprechenden Erfassungsprofils und Analysieren des Erfassungsprofils, um ein Ziel zu identifizieren, das eine Zielsignalamplitude und eine dieser entsprechende Zielposition aufweist,
- Schätzen des Radarquerschnitts des Ziels durch Vergleichen der Zielsignalamplitude mit einem Signalamplitudenbasiswert, der durch die Kalibrierkurve an der Zielposition bereitgestellt wird,
wobei das Kalibrieren der Erfassungsvorrichtung umfasst:
- Positionieren und Bewegen eines Kalibrierziels von einem Ausgangspunkt entlang eines vorbestimmten Pfads in der Umgebung auf die Erfassungsvorrichtung zu oder von dieser weg,
- Erfassen einer Abfolge von Empfangssignalen während des besagten Schritts des Bewegens des Kalibrierziels,
- Erzeugen einer Sequenz von positionsabhängigen Amplitudenprofilen (Pa1, ..., Pan), die der Abfolge von reflektierten Signalen entspricht,
- Verarbeiten und Zusammenführen der Empfangssignale der Abfolge, um ein kombiniertes Profil (Pc) als Funktion der Position zu erzeugen, indem als Amplitudenwerte des kombinierten Profils (Pc) für jede Position des vorbestimmten Pfads (D1, Dn) ein Amplitudenwert (A1, An) erhalten wird, der aus einem entsprechenden Amplitudenprofil der Sequenz extrahiert wird, für welches das Ziel als an der besagten Position (D1, Dn) befindlich erfasst wird,
wobei die Kalibrierkurve gleich einem ausgewählten Profil ist, welches das kombinierte Profil (Pc) ist.

2. Verfahren zum Schätzen eines Radarquerschnitts eines Ziels in einer Umgebung unter Verwendung einer Erfassungsvorrichtung, wobei die Erfassungsvorrichtung dazu eingerichtet ist, Sendesignale in ein Sichtfeld zu senden und Empfangssignale zu empfangen, wobei das Verfahren umfasst:
- Kalibrieren der Erfassungsvorrichtung, um eine Kalibrierkurve (Cc) zu erzeugen, die Signalamplitudenwerte als Funktion von Positionen des Ziels in dem Sichtfeld bereitstellt,
- Erfassen eines Empfangssignals, Erhalten eines entsprechenden Erfassungsprofils und Analysieren des Erfassungsprofils, um ein Ziel zu identifizieren, das eine Zielsignalamplitude und eine dieser entsprechende Zielposition aufweist,
- Schätzen des Radarquerschnitts des Ziels durch Vergleichen der Zielsignalamplitude mit einem Signalamplitudenbasiswert, der durch die Kalibrierkurve an der Zielposition bereitgestellt wird,
wobei das Kalibrieren der Erfassungsvorrichtung umfasst:
- Positionieren und Bewegen eines Kalibrierziels von einem Ausgangspunkt entlang eines vorbestimmten Pfads in der Umgebung auf die Erfassungsvorrichtung zu oder von dieser weg,
- Erfassen einer Abfolge von Empfangssignalen während des besagten Schritts des Bewegens des Kalibrierziels,
- Erzeugen einer Sequenz von positionsabhängigen Amplitudenprofilen (Pa1, ..., Pan), die der Abfolge von reflektierten Signalen entspricht,
- Verarbeiten und Zusammenführen der Empfangssignale der Abfolge, um ein kombiniertes Profil (Pc) als Funktion der Position zu erzeugen, indem als Amplitudenwerte des kombinierten Profils (Pc) für jede Position des vorbestimmten Pfads (D1, Dn) ein Amplitudenwert (A1, An) erhalten wird, der aus einem entsprechenden Amplitudenprofil der Sequenz extrahiert wird, für welches das Ziel als an der besagten Position (D1, Dn) befindlich erfasst wird,
- Erzeugen eines gefilterten Profils (Pf) durch Anwenden eines Filters auf das kombinierte Profil (Pc), wobei das Filter ein Tiefpassfilter ist, das auf Werteverteilungen als Funktion von Positionen in dem Sichtfeld wirkt,
wobei die Kalibrierkurve gleich einem ausgewählten Profil ist, welches das gefilterte Profil (Pf) ist.

3. Verfahren zum Schätzen eines Radarquerschnitts eines Ziels in einer Umgebung unter Verwendung einer Erfassungsvorrichtung, wobei die Erfassungsvorrichtung dazu eingerichtet ist, Sendesignale in ein Sichtfeld zu senden und Empfangssignale zu empfangen, wobei das Verfahren umfasst:
- Kalibrieren der Erfassungsvorrichtung, um eine Kalibrierkurve (Cc) zu erzeugen, die Signalamplitudenwerte als Funktion von Positionen des Ziels in dem Sichtfeld bereitstellt,
- Erfassen eines Empfangssignals, Erhalten eines entsprechenden Erfassungsprofils und Analysieren des Erfassungsprofils, um ein Ziel zu identifizieren, das eine Zielsignalamplitude und eine dieser entsprechende Zielposition aufweist,
- Schätzen des Radarquerschnitts des Ziels durch Vergleichen der Zielsignalamplitude mit einem Signalamplitudenbasiswert, der durch die Kalibrierkurve an der Zielposition bereitgestellt wird,
wobei das Kalibrieren der Erfassungsvorrichtung umfasst:
- Positionieren und Bewegen eines Kalibrierziels von einem Ausgangspunkt entlang eines vorbestimmten Pfads in der Umgebung auf die Erfassungsvorrichtung zu oder von dieser weg,
- Erfassen einer Abfolge von Empfangssignalen während des besagten Schritts des Bewegens des Kalibrierziels,
- Erzeugen einer Sequenz von positionsabhängigen Amplitudenprofilen (Pa1, ..., Pan), die der Abfolge von reflektierten Signalen entspricht,
- Verarbeiten und Zusammenführen der Empfangssignale der Abfolge, um ein kombiniertes Profil (Pc) als Funktion der Position zu erzeugen, indem als Amplitudenwerte des kombinierten Profils (Pc) für jede Position des vorbestimmten Pfads (D1, Dn) ein Amplitudenwert (A1, An) erhalten wird, der aus einem entsprechenden Amplitudenprofil der Sequenz extrahiert wird, für welches das Ziel als an der besagten Position (D1, Dn) befindlich erfasst wird,
- Bereitstellen einer Minimalwert-Eliminierungskurve (Ce), wobei die Menge von Positionen in der Umgebung unterteilt ist in erste Positionen (P1), an denen das kombinierte Profil (Pc) größer ist als die Minimalwert-Eliminierungskurve (Ce), und zweite Positionen (P2), an denen das kombinierte Profil (Pc) kleiner ist als die Minimalwert-Eliminierungskurve (Ce),
wobei die Werte der Kalibrierkurve (Cc) für jede Position als ein Maximum eines ausgewählten Profils, welches das kombinierte Profil (Pc) ist, und der Minimalwert-Eliminierungskurve (Ce) berechnet werden.

4. Verfahren zum Schätzen eines Radarquerschnitts eines Ziels in einer Umgebung unter Verwendung einer Erfassungsvorrichtung, wobei die Erfassungsvorrichtung dazu eingerichtet ist, Sendesignale in ein Sichtfeld zu senden und Empfangssignale zu empfangen, wobei das Verfahren umfasst:
- Kalibrieren der Erfassungsvorrichtung, um eine Kalibrierkurve (Cc) zu erzeugen, die Signalamplitudenwerte als Funktion von Positionen des Ziels in dem Sichtfeld bereitstellt,
- Erfassen eines Empfangssignals, Erhalten eines entsprechenden Erfassungsprofils und Analysieren des Erfassungsprofils, um ein Ziel zu identifizieren, das eine Zielsignalamplitude und eine dieser entsprechende Zielposition aufweist,
- Schätzen des Radarquerschnitts des Ziels durch Vergleichen der Zielsignalamplitude mit einem Signalamplitudenbasiswert, der durch die Kalibrierkurve an der Zielposition bereitgestellt wird,
wobei das Kalibrieren der Erfassungsvorrichtung umfasst:
- Positionieren und Bewegen eines Kalibrierziels von einem Ausgangspunkt entlang eines vorbestimmten Pfads in der Umgebung auf die Erfassungsvorrichtung zu oder von dieser weg,
- Erfassen einer Abfolge von Empfangssignalen während des besagten Schritts des Bewegens des Kalibrierziels,
- Erzeugen einer Sequenz von positionsabhängigen Amplitudenprofilen (Pa1, ..., Pan), die der Abfolge von reflektierten Signalen entspricht,
- Verarbeiten und Zusammenführen der Empfangssignale der Abfolge, um ein kombiniertes Profil (Pc) als Funktion der Position zu erzeugen, indem als Amplitudenwerte des kombinierten Profils (Pc) für jede Position des vorbestimmten Pfads (D1, Dn) ein Amplitudenwert (A1, An) erhalten wird, der aus einem entsprechenden Amplitudenprofil der Sequenz extrahiert wird, für welches das Ziel als an der besagten Position (D1, Dn) befindlich erfasst wird,
- Erzeugen eines gefilterten Profils (Pf) durch Anwenden eines Filters auf das kombinierte Profil (Pc), wobei das Filter ein Tiefpassfilter ist, das auf Werteverteilungen als Funktion von Positionen in dem Sichtfeld wirkt,
- Bereitstellen einer Minimalwert-Eliminierungskurve (Ce), wobei die Menge von Positionen in der Umgebung unterteilt ist in erste Positionen (P1), an denen das gefilterte Profil (Pf) größer ist als die Minimalwert-Eliminierungskurve (Ce), und zweite Positionen (P2), an denen das gefilterte Profil (Pf) kleiner ist als die Minimalwert-Eliminierungskurve (Ce),
wobei die Werte der Kalibrierkurve (Cc) für jede Position als ein Maximum eines ausgewählten Profils, welches das gefilterte Profil (Pf) ist, und der Minimalwert-Eliminierungskurve (Ce) berechnet werden.

5. Verfahren nach Anspruch 3 oder 4, wobei das Bereitstellen der Minimalwert-Eliminierungskurve (Ce) umfasst:
- Bereitstellen einer Referenzfunktion (FR) der Signalamplitude über der Position bezüglich der Erfassungsvorrichtung,
- Vergleichen des ausgewählten Profils mit der Referenzfunktion (FR), um einen Korrekturfaktor zu erzeugen,
- Berechnen der Minimalwert-Eliminierungskurve (Ce) unter Verwendung des Korrekturfaktors und der Referenzfunktion (FR).

6. Verfahren nach Anspruch 5, wobei das Vergleichen des ausgewählten Profils mit der Referenzfunktion (FR) zum Erzeugen eines Korrekturfaktors umfasst:
- Erhalten einer Familie von Referenzfunktionen (Fr) durch Multiplizieren der Referenzfunktion (FR) mit einem variierenden Korrekturfaktor,
- Auswählen, aus der Familie von Referenzfunktionen (Fr), der Kurve, die sich am besten an das ausgewählte Profil anpasst.

7. Verfahren nach Anspruch 6, umfassend das Erhalten der Minimalwert-Eliminierungskurve (Ce) durch Multiplizieren der Kurve, die sich am besten anpasst, mit einem Koeffizienten von weniger als 1.

8. Verfahren nach Anspruch 7, wobei der Koeffizient in einem Bereich von 0,5 bis 0,9 liegt.

9. Verfahren nach einem der Ansprüche 5 bis 8, wobei die Minimalwert-Eliminierungskurve (Ce) und/oder die Referenzfunktion (FR) durch die monostatische Radargleichung gegeben ist.

10. Verfahren nach einem der Ansprüche 1 bis 9, wobei der Schritt des Vergleichens der Zielsignalamplitude mit dem Signalamplitudenbasiswert das Berechnen mindestens eines Vergleichswerts umfasst, der ausgewählt ist aus einem Differenzwert, erhalten durch Subtrahieren des Basiswerts von der Zielsignalamplitude, und einem Verhältniswert, erhalten durch Dividieren der Zielsignalamplitude durch den Basiswert.

11. Verfahren nach Anspruch 10, umfassend das Zuordnen einer Zielkategorie zu dem Vergleichswert gemäß einer vorbestimmten Entsprechung.

## Revendications

1. Procédé d'estimation d'une surface équivalente radar d'une cible dans un environnement à l'aide d'un dispositif de détection, le dispositif de détection étant configuré pour émettre des signaux d'émission dans un champ de vision et recevoir des signaux de réception, le procédé comprenant:
- l'étalonnage du dispositif de détection pour générer une courbe d'étalonnage (Cc) qui fournit des valeurs d'amplitude de signal en fonction de positions de la cible dans le champ de vision,
- la détection d'un signal de réception, l'obtention d'un profil de détection correspondant, et l'analyse du profil de détection pour identifier une cible, ayant une amplitude de signal de cible et une position de cible correspondante,
- l'estimation de la surface équivalente radar de la cible par comparaison de l'amplitude de signal de cible avec une valeur de base d'amplitude de signal, fournie par la courbe d'étalonnage à la position de cible,
dans lequel l'étalonnage du dispositif de détection comprend:
- le positionnement et le déplacement d'une cible d'étalonnage depuis un point d'origine le long d'une trajectoire prédéterminée dans ledit environnement en direction ou à l'écart du dispositif de détection,
- l'acquisition d'une succession de signaux de réception pendant ladite étape de déplacement de la cible d'étalonnage,
- la génération d'une séquence de profils d'amplitude dépendant de la position (Pa1, ..., Pan), correspondant à la succession de signaux réfléchis,
- le traitement et la combinaison conjointe des signaux de réception de la succession pour générer un profil combiné (Pc) en fonction de la position, par l'obtention, en tant que valeurs d'amplitude du profil combiné (Pc), pour chaque position de la trajectoire prédéterminée (D1, Dn), d'une valeur d'amplitude (A1, An) extraite d'un profil d'amplitude correspondant de la séquence, pour lequel la cible est détectée comme étant à ladite position (D1, Dn),
dans lequel la courbe d'étalonnage est égale à un profil choisi qui est le profil combiné (Pc).

2. Procédé d'estimation d'une surface équivalente radar d'une cible dans un environnement à l'aide d'un dispositif de détection, le dispositif de détection étant configuré pour émettre des signaux d'émission dans un champ de vision et recevoir des signaux de réception, le procédé comprenant:
- l'étalonnage du dispositif de détection pour générer une courbe d'étalonnage (Cc) qui fournit des valeurs d'amplitude de signal en fonction de positions de la cible dans le champ de vision,
- la détection d'un signal de réception, l'obtention d'un profil de détection correspondant, et l'analyse du profil de détection pour identifier une cible, ayant une amplitude de signal de cible et une position de cible correspondante,
- l'estimation de la surface équivalente radar de la cible par comparaison de l'amplitude de signal de cible avec une valeur de base d'amplitude de signal, fournie par la courbe d'étalonnage à la position de cible,
dans lequel l'étalonnage du dispositif de détection comprend:
- le positionnement et le déplacement d'une cible d'étalonnage depuis un point d'origine le long d'une trajectoire prédéterminée dans ledit environnement en direction ou à l'écart du dispositif de détection,
- l'acquisition d'une succession de signaux de réception pendant ladite étape de déplacement de la cible d'étalonnage,
- la génération d'une séquence de profils d'amplitude dépendant de la position (Pa1, ..., Pan), correspondant à la succession de signaux réfléchis,
- le traitement et la combinaison conjointe des signaux de réception de la succession pour générer un profil combiné (Pc) en fonction de la position, par l'obtention, en tant que valeurs d'amplitude du profil combiné (Pc), pour chaque position de la trajectoire prédéterminée (D1, Dn), d'une valeur d'amplitude (A1, An) extraite d'un profil d'amplitude correspondant de la séquence, pour lequel la cible est détectée comme étant à ladite position (D1, Dn),
- la génération d'un profil filtré (Pf) en appliquant un filtre au profil combiné (Pc), le filtre étant un filtre passe-bas qui opère sur des distributions de valeurs en fonction de positions dans le champ de vision,
dans lequel la courbe d'étalonnage est égale à un profil choisi qui est le profil filtré (Pf).

3. Procédé d'estimation d'une surface équivalente radar d'une cible dans un environnement à l'aide d'un dispositif de détection, le dispositif de détection étant configuré pour émettre des signaux d'émission dans un champ de vision et recevoir des signaux de réception, le procédé comprenant :
- l'étalonnage du dispositif de détection pour générer une courbe d'étalonnage (Cc) qui fournit des valeurs d'amplitude de signal en fonction de positions de la cible dans le champ de vision,
- la détection d'un signal de réception, l'obtention d'un profil de détection correspondant, et l'analyse du profil de détection pour identifier une cible, ayant une amplitude de signal de cible et une position de cible correspondante,
- l'estimation de la surface équivalente radar de la cible par comparaison de l'amplitude de signal de cible avec une valeur de base d'amplitude de signal, fournie par la courbe d'étalonnage à la position de cible,
dans lequel l'étalonnage du dispositif de détection comprend :
- le positionnement et le déplacement d'une cible d'étalonnage depuis un point d'origine le long d'une trajectoire prédéterminée dans ledit environnement en direction ou à l'écart du dispositif de détection,
- l'acquisition d'une succession de signaux de réception pendant ladite étape de déplacement de la cible d'étalonnage,
- la génération d'une séquence de profils d'amplitude dépendant de la position (Pa1, ..., Pan), correspondant à la succession de signaux réfléchis,
- le traitement et la combinaison conjointe des signaux de réception de la succession pour générer un profil combiné (Pc) en fonction de la position, par l'obtention, en tant que valeurs d'amplitude du profil combiné (Pc), pour chaque position de la trajectoire prédéterminée (D1, Dn), d'une valeur d'amplitude (A1, An) extraite d'un profil d'amplitude correspondant de la séquence, pour lequel la cible est détectée comme étant à ladite position (D1, Dn),
- la fourniture d'une courbe d'élimination de valeurs minimales (Ce), dans lequel l'ensemble de positions dans l'environnement est divisé en des premières positions (P1), où le profil combiné (Pc) est supérieur à la courbe d'élimination de valeurs minimales (Ce), et des secondes positions (P2), où le profil combiné (Pc) est inférieur à la courbe d'élimination de valeurs minimales (Ce),
dans lequel les valeurs de la courbe d'étalonnage (Cc) sont calculées pour chaque position sous la forme d'un maximum d'un profil choisi, qui est le profil combiné (Pc), et de la courbe d'élimination de valeurs minimales (Ce).

4. Procédé d'estimation d'une surface équivalente radar d'une cible dans un environnement à l'aide d'un dispositif de détection, le dispositif de détection étant configuré pour émettre des signaux d'émission dans un champ de vision et recevoir des signaux de réception, le procédé comprenant :
- l'étalonnage du dispositif de détection pour générer une courbe d'étalonnage (Cc) qui fournit des valeurs d'amplitude de signal en fonction de positions de la cible dans le champ de vision,
- la détection d'un signal de réception, l'obtention d'un profil de détection correspondant, et l'analyse du profil de détection pour identifier une cible, ayant une amplitude de signal de cible et une position de cible correspondante,
- l'estimation de la surface équivalente radar de la cible par comparaison de l'amplitude de signal de cible avec une valeur de base d'amplitude de signal, fournie par la courbe d'étalonnage à la position de cible,
dans lequel l'étalonnage du dispositif de détection comprend :
- le positionnement et le déplacement d'une cible d'étalonnage depuis un point d'origine le long d'une trajectoire prédéterminée dans ledit environnement en direction ou à l'écart du dispositif de détection,
- l'acquisition d'une succession de signaux de réception pendant ladite étape de déplacement de la cible d'étalonnage,
- la génération d'une séquence de profils d'amplitude dépendant de la position (Pa1, ..., Pan), correspondant à la succession de signaux réfléchis,
- le traitement et la combinaison conjointe des signaux de réception de la succession pour générer un profil combiné (Pc) en fonction de la position, par l'obtention, en tant que valeurs d'amplitude du profil combiné (Pc), pour chaque position de la trajectoire prédéterminée (D1, Dn), d'une valeur d'amplitude (A1, An) extraite d'un profil d'amplitude correspondant de la séquence, pour lequel la cible est détectée comme étant à ladite position (D1, Dn),
- la génération d'un profil filtré (Pf) en appliquant un filtre au profil combiné (Pc), le filtre étant un filtre passe-bas qui opère sur des distributions de valeurs en fonction de positions dans le champ de vision,
- la fourniture d'une courbe d'élimination de valeurs minimales (Ce), dans lequel l'ensemble de positions dans l'environnement est divisé en des premières positions (P1), où le profil filtré (Pf) est supérieur à la courbe d'élimination de valeurs minimales (Ce), et des secondes positions (P2), où le profil filtré (Pf) est inférieur à la courbe d'élimination de valeurs minimales (Ce),
dans lequel les valeurs de la courbe d'étalonnage (Cc) sont calculées pour chaque position sous la forme d'un maximum d'un profil choisi, qui est le profil filtré (Pf), et de la courbe d'élimination de valeurs minimales (Ce).

5. Procédé selon la revendication 3 ou 4, dans lequel la fourniture de la courbe d'élimination de valeurs minimales (Ce) comprend :
- la fourniture d'une fonction de référence (FR) de l'amplitude de signal en fonction de la position par rapport au dispositif de détection,
- la comparaison du profil choisi avec la fonction de référence (FR) pour générer un facteur de correction,
- le calcul de la courbe d'élimination de valeurs minimales (Ce) en utilisant le facteur de correction et la fonction de référence (FR).

6. Procédé selon la revendication 5, dans lequel la comparaison du profil choisi avec la fonction de référence (FR) pour générer un facteur de correction comprend :
- l'obtention d'une famille de fonctions de référence (Fr) en multipliant ladite fonction de référence (FR) par un facteur de correction variable,
- la sélection, à partir de la famille de fonctions de référence (Fr), de la courbe qui s'ajuste le mieux au profil choisi.

7. Procédé selon la revendication 6, comprenant l'obtention de la courbe d'élimination de valeurs minimales (Ce) par multiplication de ladite courbe qui s'ajuste le mieux par un coefficient inférieur à 1.

8. Procédé selon la revendication 7, dans lequel ledit coefficient est compris dans une plage allant de 0,5 à 0,9.

9. Procédé selon l'une quelconque des revendications 5 à 8, dans lequel la courbe d'élimination de valeurs minimales (Ce) et/ou la fonction de référence (FR) est donnée par l'équation du radar monostatique.

10. Procédé selon l'une quelconque des revendications 1 à 9, dans lequel l'étape de comparaison de l'amplitude de signal de cible avec ladite valeur de base d'amplitude de signal comprend le calcul d'au moins une valeur de comparaison choisie parmi une valeur de différence, obtenue par soustraction de la valeur de base de l'amplitude de signal de cible, et une valeur de rapport, obtenue par division de l'amplitude de signal de cible par la valeur de base.

11. Procédé selon la revendication 10, comprenant l'association d'une catégorie de cible à ladite valeur de comparaison selon une correspondance prédéterminée.
